# FASCICULE DE BREVET EUROPEEN

(11) **EP 2 185 476 B1**
(45) Date de publication et mention de la délivrance du brevet: **13.07.2011**
(21) Numéro de dépôt: 08803534.0
(22) Date de dépôt: 02.09.2008
(51) Int. Cl.: C01G 39/00, C01G 41/00, G21C 19/48, C30B 9/12

(54) **PROCEDE DE CONVERSION DE CHLORURES DE METAUX ALCALINO-TERREUX EN TUNGSTATES ET MOLYBDATES ET SES APPLICATIONS**
VERFAHREN ZUR UMWANDLUNG VON ALKALIERDMETALLCHLORIDEN IN WOLFRAMANTE UND MOLYBDATE SOWIE ANWENDUNGEN DAFÜR
METHOD OF CONVERTING ALKALINE-EARTH METAL CHLORIDES TO TUNGSTATES AND MOLYBDATES AND APPLICATIONS THEREOF

(30) Priorité: 04.09.2007 FR 0757345
(43) Date de publication de la demande: 19.05.2010
(73) Titulaire: Commissariat à l'Énergie Atomique et aux Énergies Alternatives, 75015 Paris (FR); Centre National de la Recherche Scientifique, 75016 Paris (FR)
(72) Inventeur: HUDRY, Damien, F-84000 Avignon (FR); BARDEZ, Isabelle, F-84000 Avignon (FR); BART, Florence, F-30200 Orsan (FR); DENIARD, Philippe, F-44240 Suce Sur Erdre (FR); JOBIC, Stéphane, F-44320 Bouguenais (FR)
(74) Mandataire: Ilgart, Jean-Christophe
(86) Numéro de dépôt international: PCT/EP2008/061563
(87) Numéro de publication internationale: WO 2009/030683

(56) Documents cités:
- S. K. ARORA, B. CHUDASAMA: "Crystallization and optical properties of CaWO4 and SrWO4" CRYSTAL RESEARCH AND TECHNOLOGY, vol. 41, no. 11, 6 octobre 2006 (2006-10-06), pages 1089-1095, XP002478231 WILEY-VCH Verlag GmbH & Co. KGaA, Weinheim cité dans la demande
- A. R. PATEL AND S. K. ARORA: "Crystal Growth of BaWO4 and SrWO4 by Flux Evaporation" JOURNAL OF CRYSTAL GROWTH, vol. 23, 1974, pages 95-100, XP002478232 North-Holland Publishing Co. cité dans la demande
- A. PACKTER AND B. N. ROY: "The crystallisation of alkaline-earth metal tungstates (molybdates, chromates, and sulphates) from metal chloride melts" KRISTALL UND TECHNIK, vol. 6, no. 1, 1971, pages 39-51, XP002478233 Akademie-Verlag, Berlin
- SHUJI OISHI AND MINORU HIRAO: "Growth of CaWO4 whiskers from KCl flux" JOURNAL OF MATERIALS SCIENCE LETTERS, vol. 8, 1989, pages 1397-1398, XP002478234 Chapman and Hall Ltd
- VOLKOVICH V A ET AL: "Treatment of molten salt wastes by phosphate precipitation: removal of fission product elements after pyrochemical reprocessing of spent nuclear fuels in chloride melts" JOURNAL OF NUCLEAR MATERIALS, AMSTERDAM, NL, vol. 323, no. 1, 15 novembre 2003 (2003-11-15), pages 49-56, XP004471492 ISSN: 0022-3115 cité dans la demande

## Description

### DOMAINE TECHNIQUE

La présente invention se rapporte à un procédé qui permet de convertir des chlorures de métaux alcalino-terreux en tungstates et molybdates ainsi qu'à ses applications.

Ce procédé peut, en effet, être utilisé pour synthétiser, à partir des chlorures correspondants, des tungstates et des molybdates de métaux alcalino-terreux utiles pour la recherche et l'industrie comme, par exemple, des tungstates et des molybdates de calcium, de magnésium, de baryum et de strontium.

Mais, il peut également être utilisé pour extraire des métaux alcalino-terreux de milieux dans lesquels ils se trouvent à l'état de chlorures.

Ainsi, le procédé selon l'invention peut notamment servir dans le retraitement de combustibles nucléaires irradiés, pour récupérer les produits de fission alcalino-terreux présents dans un milieu chlorures fondus.

Il peut aussi servir dans la dépollution d'effluents riches en chlorures comme, par exemple, des eaux usées domestiques ou industrielles.

### ETAT DE LA TECHNIQUE ANTERIEURE

On connaît essentiellement deux types de procédé pyrochimique de retraitement des combustibles nucléaires irradiés : les procédés en milieu fluorures fondus et les procédés en milieu chlorures fondus.

Les procédés en milieu chlorures fondus, qui sont actuellement étudiés, conduisent à deux flux de déchets ultimes :
■ un flux salin, composé de produits de fission à l'état de chlorures, dissous dans un eutectique chlorure de lithium-chlorure de potassium (LiCl-KCl), ces produits de fission étant des métaux alcalins (césium et rubidium), des métaux alcalino-terreux (strontium et baryum) et des lanthanides (yttrium, cérium, lanthane, praséodyme, gadolinium, néodyme, samarium, europium, terbium, dysprosium) ; et
■ un flux non salin, composé de produits de fission et de produits d'activation à l'état métallique (molybdène, technétium, rhodium, palladium, ruthénium, niobium, zirconium et fer).

Le flux salin représente un déchet de haute activité qui est totalement soluble dans l'eau, d'où la nécessité de le conditionner sous une forme chimiquement stable à long terme. Son conditionnement par une vitrification du type de celle mise en oeuvre pour le conditionnement des déchets ultimes de haute activité issus des procédés hydro-métallurgiques de retraitement des combustibles nucléaires irradiés comme le procédé PUREX, n'est pas envisageable en raison de sa teneur élevée en chlore (≈ 60% en masse du déchet).

En effet, le chlore ne pouvant être incorporé au sein d'une matrice vitreuse silicatée qu'à hauteur de 1 à 2% massique, la vitrification d'un tel flux nécessiterait de le diluer au moins 30 fois, ce qui conduirait à un volume de déchet de haute activité totalement rédhibitoire.

Une solution à ce problème consisterait à prétraiter ce flux salin de manière à en éliminer le chlore et à récupérer sélectivement les produits de fission qu'il renferme.

En ce qui concerne les produits de fission alcalino-terreux, à savoir le strontium et le baryum, il a été montré qu'ils peuvent être récupérés, lorsqu'ils se trouvent sous la forme de chlorures fondus, *via* la précipitation de phosphates doubles (V. A. Volkovich et al., Journal of Nuclear Materials, 323 (2003), 49-56 **[1]**).

Cependant, la formation des phosphates doubles de métaux alcalino-terreux dépend de la nature du solvant utilisé.

Ainsi, la précipitation des phosphates doubles est efficace dans un eutectique chlorure de sodium-chlorure de potassium (NaCl-KCl) ou dans du chlorure de lithium (LiCl) pur à 750°C alors qu'elle est peu quantitative dans un mélange LiCl-KCl à 550°C.

Par ailleurs, la synthèse de tungstate et de molybdate de baryum a été effectuée dans un milieu nitrates fondus (NaNO₃ ou KNO₃) (P. Afanasiev, *Materials Letters* (2007), Article sous presse **[2]**).

Enfin, des tungstates de métaux alcalino-terreux ont été produits dans des milieux chlorures fondus par des méthodes d'évaporation à haute température. Ces études ont été effectuées dans le cadre de la synthèse de monocristaux. Ainsi, A. R. Patel et al. (Journal of Crystal Growth 23 (1974), 95-100 [3**]**) a utilisé un flux NaCl-LiCl à 950°C tandis que A. Packter et al. (Journal of Crystal Growth 18 (1973), 86-93 [4**]**) et S. K. Arora et al. (Crystal Research and Technology 41 (2006), 1089-1095 [5**]**) ont travaillé dans un flux LiCl à 900°C.

Dans la mesure où le solvant utilisé dans les procédés pyrochimiques en milieu chlorures fondus est un eutectique LiCl-KCl, il serait donc souhaitable de disposer d'un procédé qui permette d'extraire efficacement, et autant que possible sélectivement, le strontium et le baryum lorsque ceux-ci se trouvent sous forme de chlorures dans un eutectique LiCl-KCl.

Or, il s'avère que, dans le cadre de leurs travaux, les Inventeurs ont constaté que, de manière inattendue, la réaction entre des chlorures de métaux alcalino-terreux et des précurseurs de tungstène et de molybdène convenablement choisis, dans un solvant constitué d'un mélange LiCl-KCl ou de chlorure de potassium pur, conduit à une conversion totale ou quasi totale de ces chlorures en tungstates et molybdates, lesquels précipitent et constituent ainsi une phase solide que l'on peut ensuite aisément séparer du reste du milieu réactionnel.

Ils ont, en outre, constaté que, de manière encore plus inattendue, cette conversion ne se produit pas pour les chlorures de métaux alcalins présents dans le milieu réactionnel et apparaît donc être spécifique des chlorures de métaux alcalino-terreux.

Et c'est sur ces constatations qu'est basée la présente invention.

### EXPOSE DE L'INVENTION

L'invention a, en premier lieu, pour objet un procédé de conversion d'un chlorure de métal d'alcalino-terreux en au moins un sel choisi parmi les tungstates et les molybdates de ce métal, lequel procédé comprend :
la réaction du chlorure de métal alcalino-terreux avec au moins un précurseur de tungstène ou de molybdène choisi parmi les oxydes de tungstène, les oxydes de molybdène, les tungstates et les molybdates, cette réaction étant réalisée dans un solvant composé de KCl ou d'un mélange LiCl-KCl, à une température au moins égale à la température de fusion de ce solvant.

Dans ce qui précède et ce qui suit, les termes « tungstate » et « molybdate » sont pris dans leur acceptation usuelle, à savoir qu'ils désignent des sels renfermant soit l'anion bivalent WO₄²⁻ dans le cas d'un tungstate, soit l'anion bivalent MoO₄²⁻ dans le cas d'un molybdate.

Conformément à l'invention, le précurseur de tungstène ou de molybdène est, de préférence, choisi parmi l'oxyde de tungstène(VI) ou trioxyde de tungstène (WO₃), l'oxyde de molybdène (VI) ou trioxyde de molybdène (MoO₃), les tungstates et les molybdates de métaux alcalins, en particulier de sodium, de potassium et de lithium.

Il est bien entendu possible d'utiliser plusieurs précurseurs de tungstène ou de molybdène et, en particulier, des mélanges de tungstates de métaux alcalins comme, par exemple, des mélanges Na₂WO4-K₂WO₄ ou Li₂WO₄-KZWO₄, ou des mélanges de molybdates de métaux alcalins comme, par exemple, des mélanges Na₂MoO₄-K₂MoO₄ ou Li₂MoO₄-K₂MoO₄.

Le solvant est, lui, avantageusement choisi en fonction du précurseur de tungstène ou de molybdène.

Ainsi, lorsque ce précurseur est un oxyde de tungstène, et en particulier WO₃, il convient d'utiliser du chlorure de potassium comme solvant, auquel cas, la température de fusion du KCl étant de 771°C, la réaction est, de préférence, conduite à une température allant de 800 à 900°C.

Par contre, lorsque ce précurseur est un oxyde de molybdène, un tungstate ou un molybdate, et en particulier MoO₃, un tungstate ou un molybdate de métal alcalin, il est possible d'utiliser aussi bien un mélange LiCl-KCl que du chlorure de potassium comme solvant.

Ceci étant, dans ce cas, on préfère utiliser un mélange LiCl-KCl, et en particulier un mélange de composition proche ou identique à la composition eutectique, c'est-à-dire présentant un rapport massique du chlorure de lithium au chlorure de potassium de 40/60 à 50/50, et idéalement de 45,5/55,5 (eutectique), de sorte que sa température de fusion soit de 350°C ou proche de cette valeur. La réaction est alors préférentiellement conduite à une température allant de 400 à 600°C et, mieux encore, de l'ordre de 500°C.

Dans tous les cas, le chlorure de métal alcalino-terreux et le précurseur de tungstène ou de molybdène sont, de préférence, présents dans le solvant en proportions stoechiométriques (ratio molaire AT/W ou AT/Mo = 1), et le temps pendant lequel on les laisse réagir ensemble est d'une ou plusieurs heures, de préférence de l'ordre de 1 à 10 heures.

Le procédé de conversion, qui vient d'être décrit, peut avantageusement être mis à profit pour extraire un ou plusieurs métaux alcalino-terreux d'un milieu dans lequel ils se trouvent à l'état de chlorures, et en particulier d'un milieu dans lequel ce ou ces métaux alcalino-terreux sont déjà dissous dans du KCl fondu ou dans un mélange LiCl-KCl fondu, ce qui est, par exemple, le cas des produits de fission alcalino-terreux présents dans le déchet salin produit au cours du retraitement d'un combustible nucléaire irradié en milieu chlorures fondus.

Aussi, l'invention a-t-elle aussi pour objet un procédé d'extraction d'au moins un métal alcalino-terreux d'un milieu contenant ce métal sous la forme d'un chlorure, qui comprend :
a₁) la conversion du chlorure de métal alcalino-terreux en au moins un sel choisi parmi les tungstates et les molybdates de ce métal par un procédé de conversion tel que précédemment défini ; puis
b₁) la récupération du sel résultant de cette conversion.

Dans le cas où le chlorure de métal alcalino-terreux est déjà dissous dans du KCl fondu, alors l'étape a₁) du procédé d'extraction comprend de préférence :
■ l'ajout au milieu d'un tungstate ou d'un molybdate de potassium ; et
■ le maintien du milieu à une température au moins égale à la température de fusion du KCl pendant un temps suffisant pour que la conversion du chlorure de métal alcalino-terreux en tungstate ou molybdate puisse se faire.

De manière analogue, dans le cas où le chlorure de métal alcalino-terreux est déjà dissous dans un mélange LiCl-KCl fondu, alors l'étape a₁) du procédé d'extraction comprend de préférence :
■ l'ajout au milieu d'un mélange de tungstates ou de molybdates de lithium et de potassium, ces deux métaux étant alors, si possible, présents dans ce mélange dans un rapport massique identique à celui qu'ils présentent dans le mélange LiCl-KCl ; et
■ le maintien du milieu à une température au moins égale à la température de fusion du mélange LiCl-KCl pendant un temps suffisant pour que la conversion du chlorure de métal alcalino-terreux en tungstate ou molybdate puisse se faire.

Il est ainsi possible d'extraire le métal alcalino-terreux du milieu dans lequel il se trouve sans pour autant modifier la composition qualitative, voire quantitative, du solvant de ce milieu, ce qui est très appréciable dans le cadre du retraitement d'un combustible nucléaire irradié où il est hautement souhaitable de pouvoir recycler le solvant compte tenu des volumes très importants de solvant utilisés.

Dans le cas où le chlorure de métal alcalino-terreux n'est pas déjà dissous dans du KCl fondu ou dans un mélange LiCl-KCl fondu, alors l'étape a₁) du procédé d'extraction comprend :
■ le mélange du chlorure de métal alcalino-terreux et d'un solvant composé de KCl ou d'un mélange LiCl-KCl ;
■ l'ajout au mélange ainsi obtenu d'au moins un précurseur de tungstène ou de molybdène choisi parmi les oxydes de tungstène, les oxydes de molybdène, les tungstates et les molybdates ; et
■ le chauffage de l'ensemble à une température au moins égale à la température de fusion du solvant pendant un temps suffisant pour que la conversion du chlorure de métal alcalino-terreux en tungstate ou molybdate puisse se faire.

Dans tous les cas, l'étape b₁) peut être réalisée par toute technique conventionnellement utilisée pour séparer une phase solide (qui est ici constituée par le tungstate, le molybdate ou le mélange de tungstates ou de molybdates du métal alcalino-terreux) d'une phase liquide (qui est ici constituée par le reste du milieu réactionnel).

De préférence, le milieu est un flux salin issu d'un procédé de retraitement d'un combustible nucléaire irradié en milieu chlorures fondus et le métal alcalino-terreux ainsi extrait est un produit de fission, à savoir le strontium ou le baryum.

L'utilisation du procédé d'extraction selon l'invention dans le cadre du retraitement d'un combustible nucléaire irradié en milieux chlorures fondus s'est révélée présenter beaucoup d'avantages.

En effet, ce procédé d'extraction permet de récupérer les produits de fission alcalino-terreux présents dans un flux salin de façon totale ou quasi totale (rendement de 98 à 100%), de façon sélective (puisque les produits de fission alcalins ne sont, eux, pas extraits) et, qui plus est, sous la forme de tungstates ou de molybdates qui sont très faiblement solubles dans l'eau et, partant, très peu sensibles à la lixiviation et qui sont donc aptes à être utilisés comme matrices pour le confinement à long terme de ces produits de fission.

L'invention a donc encore pour objet un procédé de retraitement d'un combustible nucléaire irradié en milieu chlorures fondus, qui comprend l'extraction d'au moins un produit de fission alcalino-terreux, sous la forme d'un tungstate ou d'un molybdate, d'un flux salin par le procédé d'extraction tel que précédemment défini.

Avantageusement, ce procédé de retraitement comprend de plus la transformation du tungstate ou molybdate du produit de fission alcalino-terreux en une céramique pour le confinement à long terme de ce produit de fission.

Cette transformation peut être réalisée selon les méthodes classiquement utilisées dans la fabrication des céramiques, c'est-à-dire typiquement par mise du tungstate ou du molybdate sous la forme d'une poudre, compactage de cette poudre et frittage de la poudre ainsi compactée.

Le procédé de conversion selon l'invention peut également être mis à profit pour synthétiser des tungstates et des molybdates de métaux alcalino-terreux à partir des chlorures correspondants, comme, par exemple, des tungstates et des molybdates de calcium, de magnésium, de baryum ou de strontium.

Aussi, l'invention a-t-elle en outre pour objet un procédé de synthèse d'au moins un sel choisi parmi les tungstates et les molybdates d'alcalino-terreux, lequel procédé comprend :
a₂) la conversion d'un chlorure de métal d'alcalino-terreux en au moins un sel choisi parmi les tungstates et les molybdates de ce métal par un procédé de conversion tel que précédemment défini ; puis
b₂) la récupération du sel résultant de cette conversion.

L'invention sera mieux comprise à la lumière du complément de description qui suit et qui se rapporte à des exemples de mise en oeuvre du procédé selon l'invention pour convertir des chlorures fondus de strontium et de baryum en tungstates.

Bien entendu, ces exemples ne sont donnés qu'à titre d'illustration de l'objet de l'invention et ne constituent en aucun cas une limitation de cet objet.

### BREVE DESCRIPTION DES DESSINS

La figure 1 représente le diffractogramme de rayons X enregistré sur une poudre obtenue à l'issue de la conversion par le procédé selon l'invention d'un chlorure de strontium en tungstate de strontium en l'absence de tout autre chlorure.
La figure 2 représente le diffractogramme de rayons X enregistré sur une poudre obtenue à l'issue de la conversion par le procédé selon l'invention d'un chlorure de baryum en tungstate de baryum en l'absence de tout autre chlorure.
La figure 3 représente le diffractogramme de rayons X enregistré sur une poudre obtenue à l'issue de la conversion par le procédé selon l'invention d'un chlorure de strontium en tungstate de strontium en présence de chlorures de rubidium et de césium.
La figure 4 représente le diffractogramme de rayons X enregistré sur une poudre obtenue à l'issue de la conversion par le procédé selon l'invention d'un chlorure de baryum en tungstate de baryum en présence de chlorures de rubidium et de césium.

### EXPOSE DETAILLE D'EXEMPLES DE MISE EN OEUVRE DU PROCEDE SELON L'INVENTION

### Exemple 1 : Conversion de SrCl₂ en SrWO₄ en l'absence de tout autre chlorure :

Dans un creuset en alumine, on mélange à température ambiante (20-25°C) 1 g de SrCl₂, d'une pureté supérieure à 99%, et 9 g d'un eutectique LiCl/KCl, formé de 4,005 g de LiCl et de 4,995 g de KCl, puis on ajoute, toujours à température ambiante, 2,0567 g de K₂WO₄ au mélange ainsi obtenu.

On introduit le creuset dans un tube en quartz que l'on ferme et que l'on chauffe à 500°C à une vitesse de l'ordre de 5°C par minute. Le tube est maintenu à 500°C pendant 5 heures puis il est refroidi à une vitesse de l'ordre de 2°C par minute jusqu'à atteindre une température de 300°C. Le contenu du creuset est alors trempé à l'air.

On récupère ainsi un solide que l'on plonge dans de l'eau ultrapure à chaud (25°C ou 100°C) afin de faire passer en solution le SrCl₂ n'ayant pas réagi, puis l'ensemble est filtré sur Büchner, en utilisant un filtre avec un seuil de coupure de 0,45 µm. On lave à l'eau le résidu de filtration puis on le sèche à 120°C.

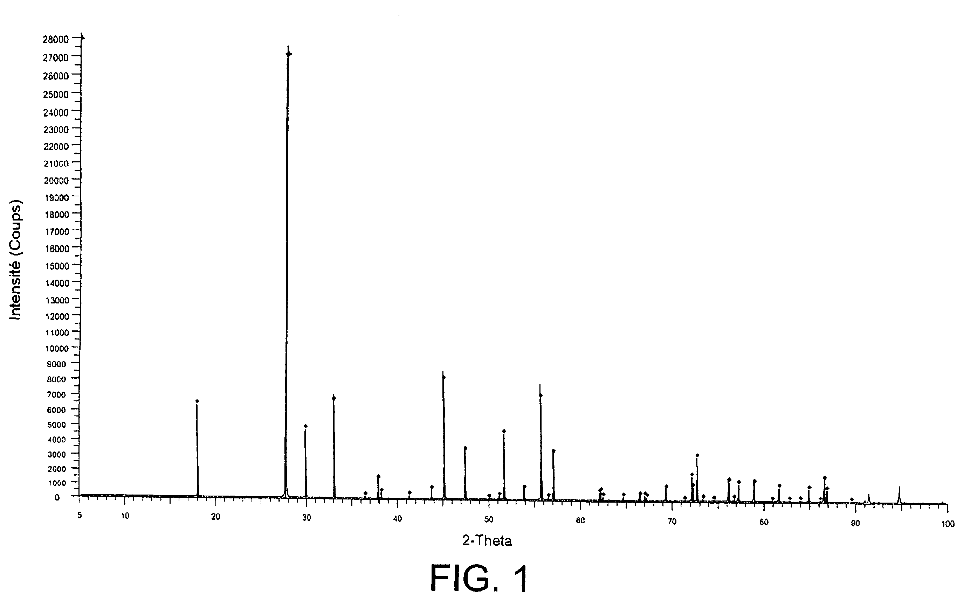

On obtient ainsi une poudre que l'on analyse par diffraction de rayons X. Le diffractogramme X de cette poudre est représenté sur la figure 1. Ce diffractogramme montre un bon accord entre les pics enregistrés et ceux de la fiche calculée du SrWO₄ (01-085-0587 (C)), prouvant que le SrCl₂ initialement mélangé à l'eutectique a bien été converti en SrWO₄.

Le rendement de la réaction est déterminé par pesée du SrWO₄ et comparaison du résultat de la pesée avec la masse théorique correspondant à 100% de réaction. Ce rendement est supérieur à 90%.

### Exemple 2 : Conversion de BaCl₂ en BaWO₄ en l'absence de tout autre chlorure :

On suit le même mode opératoire que celui décrit dans l'exemple 1 ci-avant à ceci près que l'on dissout dans l'eutectique 1 g de BaCl₂ (au lieu du gramme de SrCl₂) et que l'on utilise 1,5657 g de K₂WO₄.

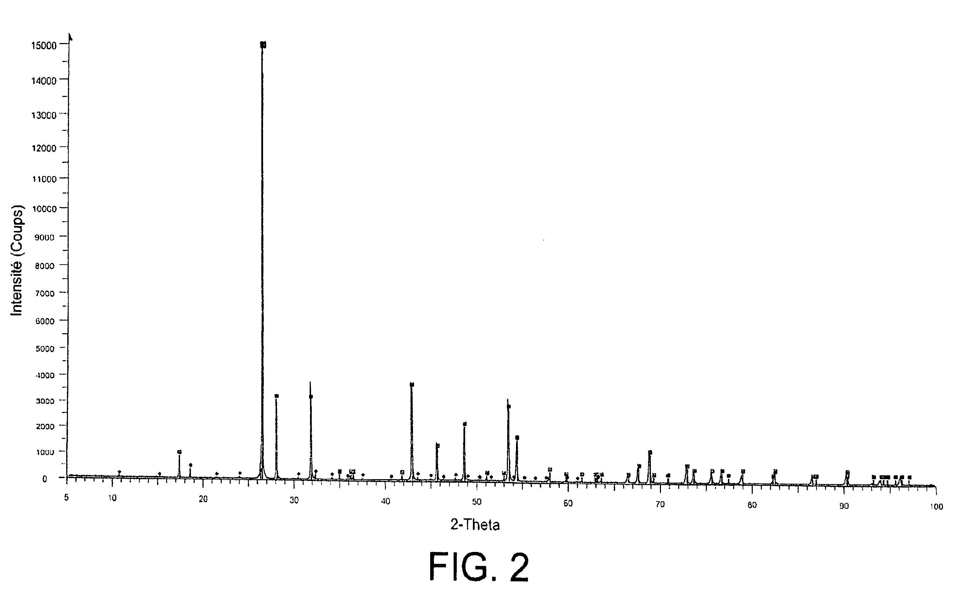

Le diffractogramme X de la poudre ainsi obtenue est représenté sur la figure 2. Ce diffractogramme montre un bon accord entre les pics enregistrés et ceux de la fiche calculée du BaWO₄ (00-043-0646 (*)), prouvant que le BaCl₂ initialement mélangé au solvant eutectique a bien été converti en BaWO₄.

Le rendement de la réaction, déterminé par pesée du BaWO₄ et comparaison du résultat de la pesée avec la masse théorique correspondant à 100% de réaction, est supérieur à 90%.

### Exemple 3 : Conversion de SrCl₂ en SrWO₄ en présence de RbCl et de CsCl :

On suit le même mode opératoire que celui décrit dans l'exemple 1 ci-avant à ceci près que l'on dissout dans l'eutectique 1 g d'un mélange de SrCl₂, RbCl et de CsCl (1/0,5/0,5 m/m) au lieu du gramme de SrCl₂.

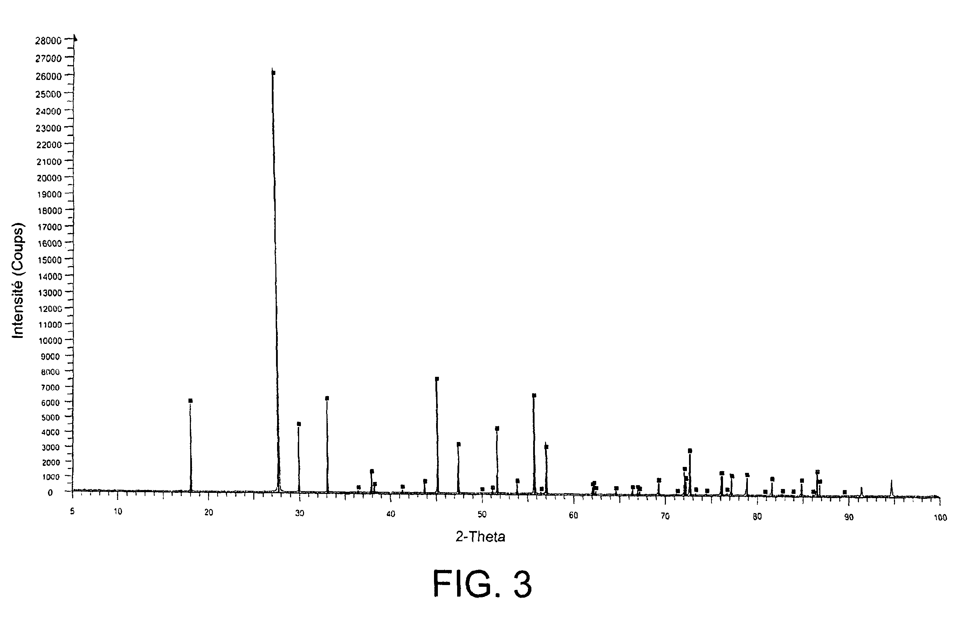

Le diffractogramme X de la poudre ainsi obtenue est représenté sur la figure 3.

Ce diffractogramme est quasi identique à celui représenté sur la figure 1, ce qui prouve, d'une part, que seul le SrCl₂ a été converti en tungstate et, d'autre part, que la présence des deux chlorures de métaux alcalins dans le milieu réactionnel n'a pas eu d'influence sur cette conversion.

Le rendement de la réaction (déterminé comme dans l'exemple 1) est supérieur à 90%.

### Exemple 4 : Conversion de BaCl₂ en BaWO₄ en présence de RbCl et de CsCl :

On suit le même mode opératoire que celui décrit dans l'exemple 2 ci-avant à ceci près que l'on dissout dans l'eutectique 1 g d'un mélange de BaCl₂, RbCl et de CsCl (1/0,5/0,5 m/m) au lieu du gramme de BaCl₂.

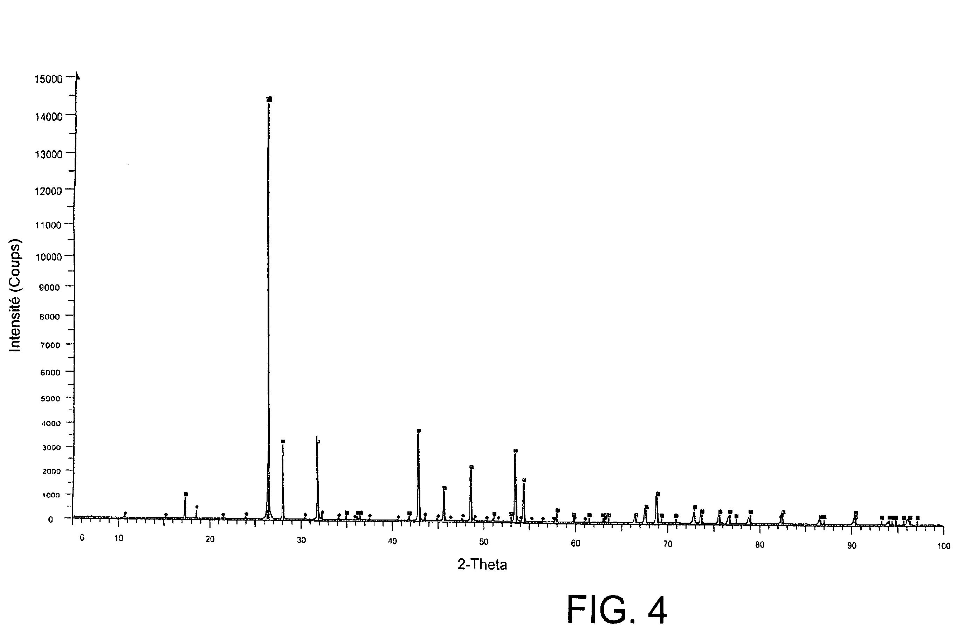

Le diffractogramme X de la poudre ainsi obtenue est représenté sur la figure 4.

Ce diffractogramme est quasi identique à celui représenté sur la figure 2, ce qui prouve, là également, que seul le BaCl₂ a été converti en tungstate et que la présence des deux chlorures de métaux alcalins dans le milieu réactionnel n'a pas eu d'influence sur cette conversion.

Le rendement de la réaction (déterminé comme dans l'exemple 2) est supérieur à 90%.

### REFERENCES CITEES

**[1]** V. A. Volkovich et al., Journal of Nuclear Materials, 323 (2003), 49-56
**[2]** P. Afanasiev, Materials Letters (2007), Article sous presse
**[3]** A. R. Patel et al., Journal of Crystal Growth 23 (1974), 95-100
**[4]** A. Packter et al., Journal of Crystal Growth 18 (1973), 86-93
**[5]** S. K. Arora et al., Crystal Research and Technology 41 (2006), 1089-1095

## Revendications

1. Procédé de conversion d'un chlorure de métal alcalino-terreux en au moins un sel choisi parmi les tungstates et les molybdates de ce métal, qui comprend :
la réaction du chlorure de métal alcalino-terreux avec au moins un précurseur de tungstène ou de molybdène choisi parmi les oxydes de tungstène, les oxydes de molybdène, les tungstates et les molybdates, cette réaction étant réalisée dans un solvant constitué par du chlorure de potassium (KCl) ou par un mélange chlorure de lithium-chlorure de potassium (LiCl-KCl) et à une température au moins égale à la température de fusion de ce solvant.

2. Procédé de conversion selon la revendication 1, dans lequel le précurseur de tungstène ou de molybdène est choisi parmi l'oxyde de tungstène(VI), l'oxyde de molybdène(VI), les tungstates de métaux alcalins et les molybdates de métaux alcalins.

3. Procédé de conversion selon la revendication 2, dans lequel les métaux alcalins sont le sodium, le potassium et le lithium.

4. Procédé de conversion selon la revendication 2, dans lequel, le précurseur de tungstène ou de molybdène étant l'oxyde de tungstène(VI), le solvant est du chlorure de potassium.

5. Procédé de conversion selon la revendication 4, dans lequel la réaction est conduite à une température allant de 800 à 900°C.

6. Procédé de conversion selon la revendication 2, dans lequel le précurseur de tungstène ou de molybdène étant un l'oxyde de molybdène(VI), un tungstate ou un molybdate de métal alcalin, le solvant est un mélange LiCl-KCl qui présente un rapport massique du chlorure de lithium au chlorure de potassium de 40/60 à 50/50 et, de préférence, de 45,5/55,5.

7. Procédé de conversion selon la revendication 6, dans lequel la réaction est réalisée à une température allant de 400° à 600°C, de préférence de l'ordre de 500°C.

8. Procédé de conversion selon l'une quelconque des revendications précédentes, dans lequel le chlorure de métal alcalino-terreux et le précurseur de tungstène ou de molybdène sont présents dans le solvant en proportions stoechiométriques.

9. Procédé d'extraction d'au moins un métal alcalino-terreux d'un milieu dans lequel il se trouve sous la forme d'un chlorure, qui comprend :
a₁) la conversion du chlorure de métal alcalino-terreux en au moins un sel choisi parmi les tungstates et les molybdates de ce métal par un procédé
de conversion selon l'une quelconque des revendications 1 à 8 ; puis
b₁) la récupération du sel résultant de cette conversion.

10. Procédé d'extraction selon la revendication 9, dans lequel le milieu comprend le chlorure de métal alcalino-terreux dans un solvant LiCl-KCl fondu et l'étape a₁) comprend :
■ l'ajout au milieu d'un mélange de tungstates ou de molybdates de lithium et de potassium ; et
■ le maintien du milieu à une température au moins égale à la température de fusion du solvant pendant un temps suffisant pour que la conversion du chlorure de métal alcalino-terreux en tungstate ou molybdate puisse se faire.

11. Procédé d'extraction selon la revendication 10, dans lequel le mélange de tungstates ou de molybdates de lithium et de potassium présente un rapport massique du lithium au potassium identique à celui du solvant.

12. Procédé d'extraction selon l'une quelconque des revendications 9 à 11, dans lequel le milieu est un flux salin issu d'un procédé de retraitement d'un combustible nucléaire irradié en milieu chlorures fondus.

13. Procédé d'extraction selon l'une quelconque des revendications 9 à 12, dans lequel le métal alcalino-terreux est le strontium ou le baryum.

14. Procédé de retraitement d'un combustible nucléaire irradié en milieu chlorures fondus, qui comprend l'extraction d'au moins un produit de fission alcalino-terreux, sous la forme d'au moins un tungstate ou molybdate, d'un flux salin par le procédé d'extraction selon l'une quelconque des revendications 9 à 13.

15. Procédé de retraitement selon la revendication 14, qui comprend de plus la transformation du tungstate ou molybdate du produit de fission alcalino-terreux en une céramique pour le confinement à long terme de ce produit de fission.

16. Procédé de synthèse d'au moins un sel choisi parmi les tungstates et les molybdates de métaux alcalino-terreux, qui comprend :
a₂) la conversion d'un chlorure de métal alcalino-terreux en au moins un sel choisi parmi les tungstates et les molybdate de ce métal par un procédé selon l'une quelconque des revendications 1 à 8 ; puis
b₂) la récupération du sel résultant de cette conversion.

17. Procédé de synthèse selon la revendication 16, dans lequel le métal alcalino-terreux
est le calcium, le magnésium, le baryum ou le strontium.

## Claims

1. Process for converting an alkaline-earth metal chloride to at least one salt chosen from the tungstates and molybdates of this metal, which comprises:
the reaction of the alkaline-earth metal chloride with at least one precursor of tungsten or of molybdenum chosen from tungsten oxides, molybdenum oxides, tungstates and molybdates, this reaction being carried out in a solvent constituted by potassium chloride (KCl) or by a lithium chloride/potassium chloride (LiCl/KCl) mixture and at a temperature at least equal to the melting point of this solvent.

2. Conversion process according to Claim 1, in which the precursor of tungsten or of molybdenum is chosen from tungsten(VI) oxide, molybdenum(VI) oxide, alkali metal tungstates and alkali metal molybdates.

3. Conversion process according to Claim 2, in which the alkali metals are sodium, potassium and lithium.

4. Conversion process according to Claim 2, in which, the precursor of tungsten or of molybdenum being tungsten(VI) oxide, the solvent is potassium chloride.

5. Conversion process according to Claim 4, in which the reaction is carried out at a temperature ranging from 800 to 900°C.

6. Conversion process according to Claim 2, in which, the precursor of tungsten or of molybdenum being molybdenum(VI) oxide, an alkali metal tungstate or molybdate, the solvent is an LiCl/KCl mixture which has a weight ratio of the lithium chloride to the potassium chloride of 40/60 to 50/50 and, preferably, of 45.5/55.5.

7. Conversion process according to Claim 6, in which the reaction is carried out at a temperature ranging from 400°C to 600°C, preferably of the order of 500°C.

8. Conversion process according to any one of the preceding claims, in which the alkaline-earth metal chloride and the precursor of tungsten or of molybdenum are present in the solvent in stoichiometric proportions.

9. Process for extracting at least one alkaline-earth metal from a medium in which it is found in the form of a chloride, which comprises:
a₁) the conversion of the alkaline-earth metal chloride to at least one salt chosen from the tungstates and molybdates of this metal via a conversion process according to any one of Claims 1 to 8; then
b₁) the recovery of the salt resulting from this conversion.

10. extraction process according to Claim 9, in which the medium comprises the alkaline-earth metal chloride in a molten LiCl/KCl solvent and step a₁) comprises:
■ the addition, to the medium, of a mixture of lithium and potassium tungstates or molybdates; and
■ keeping the medium at a temperature at least equal to the melting point of the solvent for a sufficient time so that the conversion of the alkaline-earth metal chloride to tungstate or molybdate can take place.

11. Extraction process according to Claim 10, in which the mixture of lithium and potassium tungstates or molybdates has a weight ratio of the lithium to the potassium that is identical to that of the solvent.

12. Extraction process according to any one of Claims 9 to 11, in which the medium is a salt flux from a process for reprocessing a spent nuclear fuel in a molten chloride medium.

13. Extraction process according to any one of Claims 9 to 12, in which the alkaline-earth metal is strontium or barium.

14. Process for reprocessing a spent nuclear fuel in a molten chloride medium, which comprises the extraction of at least one alkaline-earth fission product, in the form of at least one tungstate or molybdate, from a salt flux via the extraction process according to any one of Claims 9 to 13.

15. Reprocessing process according to Claim 14, which further comprises the conversion of the tungstate or molybdate of the alkaline-earth fission product to a ceramic for the long-term containment of this fission product.

16. Process for synthesizing at least one salt chosen from tungstates and molybdates of alkaline-earth metals, which comprises:
a₂) the conversion of an alkaline-earth metal chloride to at least one salt chosen from the tungstates and molybdates of this metal by a process according to any one of Claims 1 to 8; then
b₂) the recovery of the salt resulting from this conversion.

17. Synthesis process according to Claim 16, in which the alkaline-earth metal is calcium, magnesium, barium or strontium.

## Patentansprüche

1. Verfahren zur Umwandlung eines Erdalkalimetallchlorids in mindestens ein Salz, das aus Wolframaten und Molybdaten dieses Metalls gewählt ist, wobei das Verfahren beinhaltet:
die Reaktion des Erdalkalimetallchlorids mit mindestens einem Vorläufer von Wolfram oder Molybdän, die aus Wolframoxiden, Molybdänoxiden, Wolframaten und
Molybdaten gewählt sind, wobei diese Reaktion in einem Lösungsmittel durchgeführt wird, das durch Kaliumchlorid (KCl) oder durch ein Lithiumchlorid-Kaliumchlorid-(LiCl-KCl)- Gemisch gebildet ist, und bei einer Temperatur durchgeführt wird, die mindestens so groß wie die Schmelztemperatur dieses Lösungsmittels ist.

2. Verfahren zur Umwandlung nach Anspruch 1, bei dem der Vorläufer von Wolfram oder von Molybdän gewählt ist aus einem Wolfram(VI)-oxid, einem Molybdän(VI)-oxid, Wolframaten von Alkalimetallen und Molybdaten von Alkalimetallen.

3. Verfahren zur Umwandlung nach Anspruch 2, bei dem es sich bei den Alkalimetallen um Natrium, Kalium und Lithium handelt.

4. Verfahren zur Umwandlung nach Anspruch 2, bei dem, wobei der Vorläufer von Wolfram oder Molybdän ein Wolfram(VI)-oxid ist, das Lösungsmittel Kaliumchlorid ist.

5. Verfahren zur Umwandlung nach Anspruch 4, bei dem die Reaktion bei einer Temperatur von 800 - 900 °C durchgeführt wird.

6. Verfahren zur Umwandlung nach Anspruch 2, bei dem, wobei der Vorläufer von Wolfram oder Molybdän ein Molybdän(VI)-oxid, ein Wolframat oder ein Molybdat eines Alkalimetalls ist, das Lösungsmittel ein LiCl-KCl-Gemisch ist, das ein Massenverhältnis von Lithiumchlorid zu Kaliumchlorid von 40/60 bis 50/50, und vorzugsweise von 45,5/55,5 aufweist.

7. Verfahren zur Umwandlung nach Anspruch 6, bei dem die Reaktion bei einer Temperatur von 400 - 600 °C, und vorzugsweise ca. 500 °C durchgeführt wird.

8. Verfahren zur Umwandlung nach einem der vorhergehenden Ansprüche, bei dem das Erdalkalimetallchlorid oder der Vorläufer von Wolfram oder von Molybdän im Lösungsmittel in stöchiometrischen Anteilen vorhanden sind.

9. Verfahren zur Extraktion mindestens eines Erdalkalimetalls aus einer Umgebung, in der es sich in Form eines Chlorids findet, wobei es beinhaltet:
a₁) die Umwandlung des Erdalkalimetallchlorids in mindestens ein Salz, das aus Wolframaten und Molybdaten dieses Metalls gewählt ist, und zwar mittels eines Umwandlungsverfahrens nach einem der Ansprüche 1 bis 8; dann b₁) Zurückgewinnung des aus dieser Umwandlung resultierenden Salzes.

10. Verfahren zum Extrahieren nach Anspruch 9, bei dem die Umgebung ein Erdalkalimetallchlorid in einem geschmolzenen LiCl-KCl-Lösungsmittel aufweiset und Schritt a₁) beinhaltet:
- es wird der Umgebung ein Gemisch aus Wolframaten oder Molybdaten von Lithium und von Kalium zugesetzt; und
- Halten der Umgebung auf einer Temperatur, die mindestens so groß wie die Schmelztemperatur des Lösungsmittels ist, und zwar während einer Zeit, die ausreicht, damit die Umwandlung des Erdalkalimetallchlorids in Wolframat oder Molybdat erfolgen kann.

11. Verfahren zum Extrahieren nach Anspruch 10, bei dem das Gemisch aus Wolframaten oder Molybdaten von Lithium und von Kalium ein Massenverhältnis von Lithium zu Kalium aufweist, das identisch ist zu dem des Lösungsmittels.

12. Verfahren zum Extrahieren nach einem der Ansprüche 9 bis 11, bei dem die Umgebung ein Salzstrom ist, der aus einem Verfahren zur Wiederautbereitung eines bestrahlten Nuklearbrennstoffs in einer Umgebung von geschmolzenen Chloriden entstammt.

13. Verfahren zum Extrahieren nach einem der Ansprüche 9 bis 12, bei dem das Erdalkalimetall Strontium oder Barium ist.

14. Verfahren zur Wiederaufbereitung eines bestrahlten Nuklearbrennstoffs in einer Umgebung von geschmolzenen Chloriden, welches das Extrahieren mindestens eines Erdalkali-Spaltproduktes, in Form mindestens eines Wolframates oder Molybdates, aus einem Salzstrom mittels des Verfahrens zum Extrahieren nach einem der Ansprüche 9 bis 13 beinhaltet.

15. Verfahren zur Wiederaufbereitung nach Anspruch 14, das außerdem das Transformieren von Wolframat oder Molybdat des Erdalkali-Spaltproduktes zu einem keramischen Material für eine langfristige Einschließung dieses Spaltproduktes beinhaltet.

16. Verfahren zur Synthese mindestens eines Salzes, das aus Wolframaten und Molybdaten von Erdalkalimetallen gewählt ist, wobei es beinhaltet:
a₂) die Umwandlung eines Erdalkaümetallchlorids in mindestens ein Salz, das aus Wolframaten und Molybdaten dieses Metalls gewählt ist, und zwar mittels eines Verfahrens nach einem der Ansprüche 1 bis 8; dann
b₂) Zurückgewinnung des aus dieser Umwandlung resultierenden Salzes.

17. Verfahren zur Synthese nach Anspruch 16, bei dem das Erdalkalimetall Calcium, Magnesium, Barium oder Strontium ist.
